(19) Europäisches Patentamt
European Patent Office
Office européen des brevets

(11) **EP 3 343 745 B1**

(12) **EUROPEAN PATENT SPECIFICATION**

(45) Date of publication and mention
of the grant of the patent:
**15.07.2020 Bulletin 2020/29**

(51) Int Cl.:
***H02M 5/458*** (2006.01)

(21) Application number: **16425119.1**

(22) Date of filing: **29.12.2016**

(54) **INVERTER-GENERATOR APPARATUS**

WECHSELRICHTER-GENERATOR-VORRICHTUNG

APPAREIL ONDULEUR-GÉNÉRATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.07.2018 Bulletin 2018/27**

(73) Proprietor: **MICROTEC S.r.l.**
**21032 Caravate, Varese (IT)**

(72) Inventors:
• **Salvo, Francesco**
**I-21032 Caravate, Varese (IT)**

• **Barberini, Marcello**
**I-21032 Caravate, Varese (IT)**
• **Francini, Vanes**
**I-21032 Caravate, Varese (IT)**

(74) Representative: **Mozzi, Matteo et al**
**Jacobacci & Partners S.p.A.**
**Via Senato, 8**
**20121 Milano (IT)**

(56) References cited:
**EP-A2- 1 187 305      JP-A- H05 292 759
JP-A- 2005 110 336    US-A- 5 315 497**

**Description**

TECHNOLOGIC BACKGROUND OF THE INVENTION

Field of application

The present invention relates to the field of electronic power systems for supplying residential and industrial electrical loads with voltages having amplitudes and frequencies of predetermined value. In particular, the invention relates to an inverter-generator apparatus configured to generate a sinusoidal voltage for supplying such electrical loads having predetermined amplitude and frequency and with reduced harmonic distortion.

Prior art

As known, an inverter-generator is an electronic apparatus configured to transform the energy produced by a generator moved by an internal combustion engine, available in the form of a three-phase input voltage having frequency and amplitude dependent on the revolution speed of the engine, to generate a single-phase voltage adapted to supply the loads commonly connected to the normal electrical networks of the residential and industrial systems (machinery, household appliances, lights, electronic apparatuses, etc.). Frequency values of the generated output single-phase voltage fall within intervals of predetermined values according to the electrical standards in use worldwide.

In particular, the three-phase input voltage of the inverter-generator apparatus is supplied to a voltage rectifying and control stage to generate a direct current voltage or direct voltage (DC). Such a direct voltage is stored in a capacitor array (DC Bus or DC Link) of the inverter-generator apparatus. Such a direct voltage is supplied to an output stage or inverter stage of the inverter-generator apparatus itself, which, by modulating a sinusoidal signal with PWM (Pulse Width Modulation) technique and then filtering the carrier, e.g. with a filter LC, is configured to generate a sinusoidal voltage having predetermined frequency and negligible harmonic distortion at the output of the apparatus.

In several applications, both in the residential and industrial environment, the need is felt to have inverter-generators capable of providing, on respective output terminals, two sinusoidal output voltages independently referred to a common ground potential. In particular, each of such sinusoidal voltages must have amplitude and frequency equal to about 110 V (or 120 V) and about 50 Hz (or 60 Hz) as a function of the European or American electrical reference standards.

Concurrently, the inverter-generator must provide a differential output voltage, of amplitude equal to about 220 V (or 240 V), taken between the aforesaid output terminals.

An example of inverter-generator of the known type which responds to such needs consists of two rectifier/inverter sections connected to each other by means of a common ground terminal. Each section of the inverter-generator includes a respective three-phase permanent magnet voltage generator. Each generator is connected to a respective rectifier bridge, which may be either of the "non-controlled" type (six diode bridge) or of the "semi-controlled" type (bridge comprising three SCRs and three diodes). The rectifier bridge of each section supplies a direct voltage (DC) at the input of a respective inverter stage associated therewith by means of the interposition of a capacitor. It is worth noting that in order to output two independent sinusoidal voltages with amplitude of about 120V and concurrently a differential output voltage of about 240 V, the inverter stages of the known inverter-generator are chosen in Full H-Bridge Inverter configuration.

Although the use of inverters in Full Bridge configuration has the advantage of providing a sinusoidal voltage output with reduced harmonic distortion, the inverter-generator of known type has the disadvantage of a complex circuit structure, in which each circuit component is substantially duplicated, and which incidentally requires the use of a double generator. Such a limit, related to the complexity of the structure and to the use of a double generator, makes such known inverter-generator costly and hardly usable in several practical applications.

Document JP H05 292759 A relates to a control apparatus for an internal combustion engine having an alternating current generator connected to an engine, a power conversion apparatus having a forward conversion section, an electrolytic capacitor and an inverse conversion section, and an engine starting battery.

Document US 5,315,497 A describes an apparatus capable of conditioning a variety of utility service AC power inputs having distortion and noise into a clean AC power signal at the output by using symmetrical topology.

Document JP 2005 110336 A relates to a power conversion device having a neutral point in a direct current voltage, the power conversion device is provided with means for suppressing fluctuations in the neutral point potential.

Document EP 1187305 A2 describes an inverter suitable for use with portable AC power supply unit.

SUMMARY OF THE INVENTION

It is the object of the present invention to devise and provide an inverter-generator apparatus which allows to overcome at least partially the drawbacks shown above in relation to the inverter-generators of the prior art.

In particular, it is the object of the invention to provide an inverter-generator apparatus configured to output a sinusoidal voltage having predetermined amplitude and frequency, which has a simpler circuit structure and is less costly than the inverter-generators of known type, despite ensuring the same reduced harmonic distortion of the output voltage.

Such an object is achieved by means of an inverter-generator apparatus according to claim 1.

It is another object of the invention to provide an inverter-generator apparatus which allows to output two independently sinusoidal voltages and a differential output voltage, having predetermined amplitudes and frequencies at the same time, which has a simpler circuit structure than the known solutions, despite ensuring a reduced harmonic distortion of the generated voltages.

Preferred embodiments of such an apparatus are described in dependent claims 2-16.

BRIEF DESCRIPTION OF THE DRAWINGS

Further features and advantages of such an inverter-generator apparatus according to the invention will become apparent from the following description which discloses preferred embodiments, given by way of indicative, non-limiting examples, with reference to the accompanying drawings, in which:

- **figure 1** shows a circuit diagram of an inverter-generator apparatus according to the present invention;
- **figure 2** shows a circuit diagram of an example of a first control circuit of controlled-trigger semiconductor electronic devices included in the inverter-generator apparatus in figure 1;
- **figure 3** shows a circuit diagram of an example of a second control circuit of controlled-trigger semiconductor electronic devices included in the inverter-generator apparatus in figure 1;
- **figure 4** shows a circuit diagram of an embodiment of a voltage discriminator block of voltages included in the control circuits figures 3 and 4;
- **figures 5A and 5B** show, as a function of time, charts indicative of a voltage, current and phase generated by a three-phase generator of the apparatus in figure 1;
- **figures 6A-6E** show, as a function of time, charts indicative of voltage signals associated with the diagram of the first control circuit in figure 2 and one of the phase voltages of the apparatus;
- **figures 7A-7E** show, as a function of time, charts indicative of voltage signals associated with the diagram of the second control circuit in figure 3 and one of the phase voltages of the apparatus;
- **figures 8A-8G** show, as a function of time, charts indicative of the three-phase voltage signals generated by the three-phase generator of the apparatus in figure 1 and charts indicative of the digital signals generated by the voltage block in figure 4.

Similar or equivalent elements in the aforesaid figures are indicated by means of the same reference numerals.

DETAILED DESCRIPTION OF THE PREFERRED EMBODIMENTS

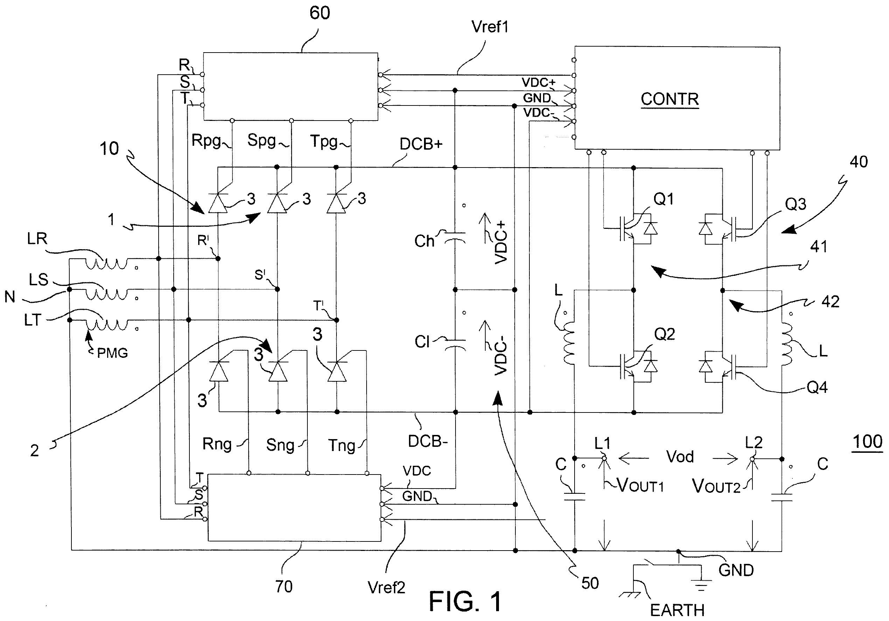

With reference to figure 1, an inverter-generator apparatus according to the invention is indicated as a whole by reference numeral 100.

Hereinafter, such an inverter-generator apparatus 100 will also simply be referred to as an apparatus. Such an apparatus 100 is an electronic apparatus configured to transform the energy produced by a generator moved by an internal combustion engine, e.g. available in the form of a three-phase input voltage, to generate a single-phase voltage adapted to supply the loads commonly connected to the normal electrical networks of the residential and industrial systems (machinery, household appliances, lights, electronic apparatuses, etc.).

In particular, such an inverter-generator apparatus 100 comprises a polyphase voltage generator PMG, which supplies at the input a rectifying/control stage 10 configured to rectify and control the polyphase voltage supplied by the polyphase voltage generator PMG to generate a direct output voltage. The polyphase voltage generator PMG has a common node N for connecting the phases.

Furthermore, the apparatus 100 comprises a DC/AC converter stage 40 configured to operate on two direct voltages having equal amplitude. Such a DC/AC converter stage is connected to the rectifying/control stage 10 by means of a first DCB+ and a second DCB- conductive line. Furthermore, the DC/AC converter stage 40 comprises an analog/digital control unit CONTR operating on the basis of appropriate software. Such a DC/AC converter stage is configured to generate, in response to the direct voltage generated by the rectifying/control stage 10, a first alternating output voltage Vout1 between a first output terminal L1 and a common apparatus terminal GND of the apparatus 100. Such a common terminal GND of the apparatus 100 is connected to the common node N of the polyphase generator PMG.

In an embodiment, the DC/AC converter stage 40 includes a first Half Bridge inverter 41 connected between the first DCB+ and second DCB- conductive lines. Such a first Half Bridge inverter 41 includes first transistors Q1, Q2

which can be activated/deactivated by the control unit CONTR to generate, in response to the direct voltage generated by the rectifying/control stage 10, the aforesaid first output alternating voltage Vout1 between the first output terminal L1 and the common terminal GND of the apparatus. In particular, the first output voltage Vout1 is generated by means of an appropriate filter LC.

Furthermore, the apparatus 100 comprises a voltage storage stage 50 interposed between the rectifying/control stage 10 and the DC/AC converter stage 40.

More in detail, such a storage stage 50 comprises a first capacitor Ch, connected between the first conductive line DCB+ and the common terminal GND of the apparatus. Such a first capacitor Ch is configured to store a first direct voltage VDC+ of the direct voltage generated by the rectifying/control stage 10. Furthermore, the storage stage 50 includes a second capacitor Cl, connected between the second conductive line DCB- and the common terminal GND of the apparatus. Such a second capacitor Cl is configured to store a second direct voltage VDC- of the direct voltage generated by the rectifying/control stage 10.

The first VDC+ and second VDC- direct voltages have the same amplitude and their sum is equal to the aforesaid direct voltage.

Advantageously, the aforesaid rectifying/control stage 10 includes a first 1 and a distinct second 2 group of mutually equal controlled-trigger semiconductor electronic devices 3. In particular, each electronic device of the first group is connected to an electronic device of the second group. Furthermore, all controlled-trigger semiconductor electronic devices 3 are mutually equal and generally available in commerce in a single standard package.

Furthermore, the rectifying/control stage 10 includes a first control circuit 60 of the controlled-trigger semiconductor electronic devices 3 of the first group 1. Such a first control circuit 60 is configured to limit a first current circulating in the electronic devices 3 of the first group 1 having a peak value proportional to a first reference voltage Vref1 by timing the activation devices of the semiconductor electronic devices obtained on the basis of phase voltages R, S, T generated by the polyphase voltage generator PMG and of the first direct voltage VDC+.

Additionally, the rectifying/control stage 10 includes a second control circuit 70 of the controlled-trigger semiconductor electronic devices 3 of the second group 2. Such a second control circuit 70 is configured to limit a second current circulating in the electronic devices 3 of the second group 2 having a peak value proportional to a second reference voltage Vref2 by timing the activation devices of the semiconductor electronic devices obtained on the basis of the aforesaid phase voltages R, S, T generated by the polyphase voltage generator PMG and of the second direct voltage VDC-.

Advantageously, the analog/digital control unit CONTR of the DC/AC converter stage 40 is configured to generate the aforesaid first Vref1 and second Vref2 reference voltages to keep the first direct voltage VDC+ stored in the first capacitor Ch and the second direct voltage VDC- stored in the second capacitor Cl equal to predetermined constant values as a load connected to the inverter-generator apparatus as a whole varies.

With reference to the embodiment in figure 1, the polyphase voltage generator PMG is a three-phase generator which includes a first LR, a second LS and a third LT winding to provide a first R, a second S and a third T phase voltage, to the rectifying/control stage 10, respectively. Each winding has a respective first terminal R', S', T' connected to the rectifying/control stage 10 and a second terminal connected to the common node N of the polyphase voltage generator PMG connected to the common terminal GND of the apparatus 100.

In an embodiment, the common terminal GND of the apparatus 100 is connected directly to the terminal to the ground potential EARTH, thus constraining the common node N of the generator PMG to such a potential. This ensures versatility of the inverter-generator apparatus 100 of the invention because it makes it compatible with the safety standards in force in naval and industrial safety standards.
In a different embodiment, the common terminal GND of the apparatus 100 is kept disconnected from the ground potential terminal EARTH.

Again with reference to the embodiment in figure 1, the DC/AC converter stage 40 of the apparatus 100 further includes a second Half Bridge inverter 42 connected between the first DCB+ and second DCB- conductive lines and similar to the first Half Bridge inverter 41. Such a second Half Bridge inverter 42 includes second transistors Q3, Q4 which can be activated/deactivated by the control unit CONTR to generate, in response to the direct voltage generated by the rectifying/control stage 10, a second output alternating voltage Vout2 between the second output terminal L2 and the common terminal GND of the apparatus. The second Half Bridge inverter 42 also includes an output filter LC to provide the second output voltage Vout2.
It is worth noting that, with the above description, as the second transistors Q3, Q4 can be activated/deactivated in a manner similar to the first transistors Q1, Q2 and are equal to the latter, the first Vout1 and second Vout2 output voltages have the same amplitude and frequency, but different phase.

Advantageously, the DC/AC converter stage 40 of the apparatus 100 is configured to generate, in response to the direct voltage generated by the rectifying/control stage 10, a differential output alternating voltage Vod between said first L1 and second L2 output terminals. In particular, on the basis of the structural choices described above, such a differential output voltage Vod has the same frequency as said first output voltage Vout1 and an amplitude which is double the amplitude of said first voltage Vout1.

In a preferred embodiment of the invention, all the controlled-trigger semiconductor electronic devices 3 of the rectifying/control stage 10 are thyristors or SCRs (silicon controller rectifiers). In particular, the rectifying/control stage 10 comprises six thyristors 3 as a whole. The three thyristors 3 of the first group 1 have a cathode terminal connected to the first conductive line DCB+ and an anode terminal connected to a cathode terminal of one of the three thyristors of the second group 2. The three thyristors of the second group 2 have an anode terminal connected to the second conductive line DCB-.

Each thyristor 3 has a gate which can be activated by a respective activation signal Rpg, Spg, Tpg, Rng, Sng, Tng applied by either the first 60 or second 70 control circuit, respectively.

In other words, based on the configuration described above, the rectifying/control stage 10 is a three-phase full controlled bridge rectifier which works in a manner similar to the two three-phase half-wave controlled rectifiers, each of which allows to control the voltages interdependently on the first Ch and second Cl capacitors, respectively, in order to keep them balanced instant by instant, even with imbalanced and asymmetric loads.

In an embodiment, the control unit or controller CONTR comprises a microcontroller (of known type) configured to receive at the input the first VDC+ and second VDC- direct voltages and to provide the first Vref1 and second Vref2 reference voltages to the first 60 and second 70 control circuits, respectively.

In other words, the CONTR cooperates with the first 60 and second 70 control circuits of the three-phase bridge, which are mutually independent to keep the voltages constant on the first Ch and second Cl capacitors.

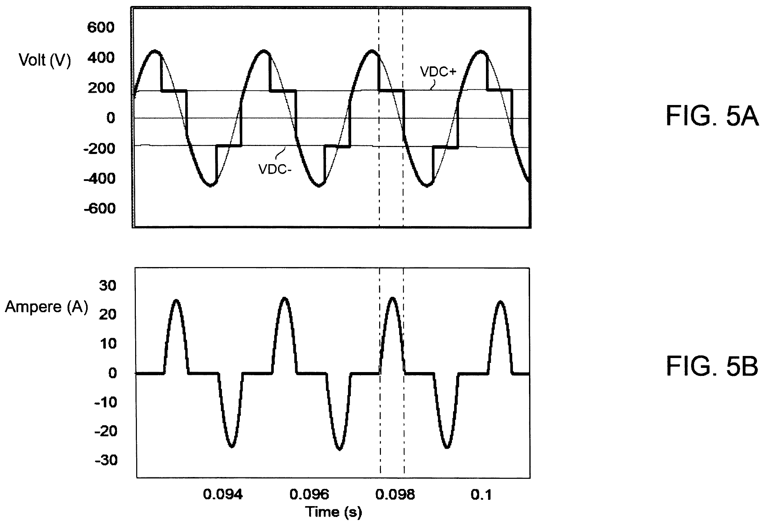

It is worth noting that the alternator associated with the three-phase voltage generator PMG turns at variable speed. Therefore, both the frequency and the amplitude of the generated phase voltages R, S, T are not constant in the various operating conditions. Furthermore, given the high output impedance of the alternator and the discontinuous conduction of the current on the rectifier bridge of the rectifying/control stage 10, the waveforms of the three phase voltages R, S, T are strongly deformed because of the switching of the thyristors 3. An example of trend of the first phase voltage R over time is shown in figure 5A. Similar trends can be reproduced for the second S and for the third T phase voltage. As shown in figure 5A, the waveform of the first phase voltage R differs from a perfect sinusoid (shown in figure with a thin line). In particular, during the step of biasing of thyristors 3, the first phase voltage R assumes value equal to either the first VDC+ or second VDC- direct voltage of the first Ch and of the second Cl capacitor. This is associated with current pulse waveforms, as shown in figure 5B.

Furthermore, again with reference to figure 5A, the zero-crossing position of the first phase voltage R taken in consideration is altered by the switching even if the output voltage of the alternator is kept constant.

The first 60 and second 70 control circuits of the apparatus 100 of the invention allow to avoid such drawbacks.

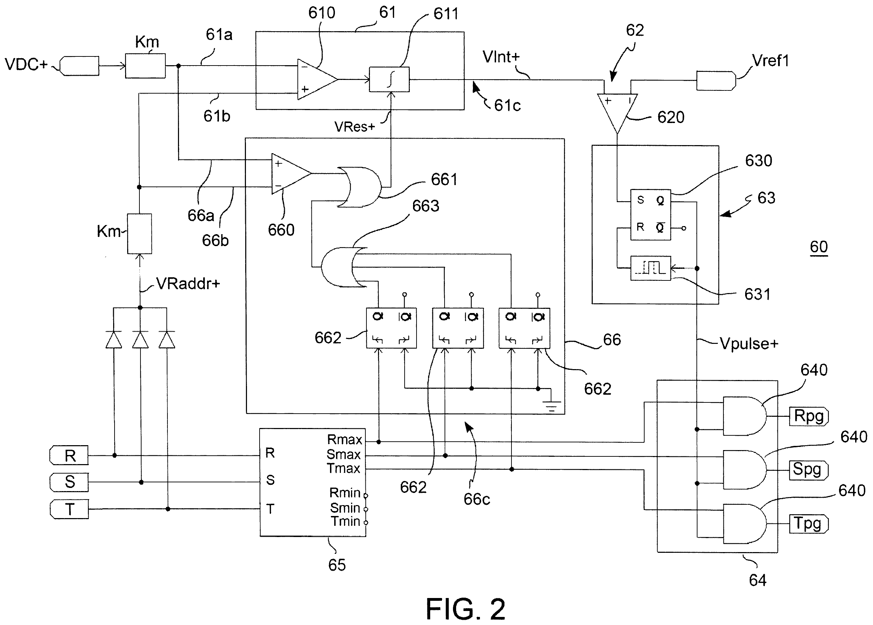

With reference to the example in figure 2, the first control circuit 60 comprises a resettable differential integrator block 61 configured to receive the first/second direct voltage VDC+ at a first input 61a and a first rectified voltage VRadd+ at a second input 61b. Such a rectified voltage VRadd+ is obtained by selecting instant by instant the maximum positive voltage from the phase voltages of the polyphase generator PMG, in particular from the first R, the second S and the third T phase voltage.

It is worth noting that both the first direct voltage VDC+ and the first rectified voltage VRadd+ at the input of the resettable different integrator block 61 are processed with an appropriately scale factor Km.

Such a resettable integrator block 61 is configured to generated a first integrated voltage Vint+ on an output 61c. In other words, the output of the integrator 61 is equal to the integral of the difference between the greater of the voltages of phases R, S or T and the first voltage VDC+.

Furthermore, the first control circuit 60 further comprises a comparison block of current references 62 configured to compare the first integrated voltage Vint+ with the first reference voltage Vref1 generated by the control unit CONTR. Thereby, the comparison block 62 is adapted to drive a pulse generator block 63 to generate a first pulse voltage Vpulse +.

Additionally, the first control circuit 60 comprises a selection block 64 of the controlled-trigger semiconductor electronic device 3 of the first group 1 to be activated. Such a selection block receives at the input the aforesaid first pulse voltage Vpulse+ and first enabling signals Rmax, Smax, Tmax generated by a voltage discriminator block 65 when the maximum values of the aforesaid phase voltages of the polyphase generator, in particular of the first R, second S and third T phase voltages of the three-phase generator PMG, have been processed.

Furthermore, the first control circuit 60 comprises a generation block 66 of a reset signal for the resettable differential integrator 61. Such a block 66 is configured to generate the reset signal VRes+ on the basis of:

- the first direct voltage VDC+ supplied to a respective first input 66a of such a block 66;
- the first rectified voltage VRadd+ supplied to a respective second input 66b of such a block 66;
- the first enabling signals Rmax, Smax, Tmax generated by the discriminator block 65 supplied to a respective third input 66c of such a block 66.

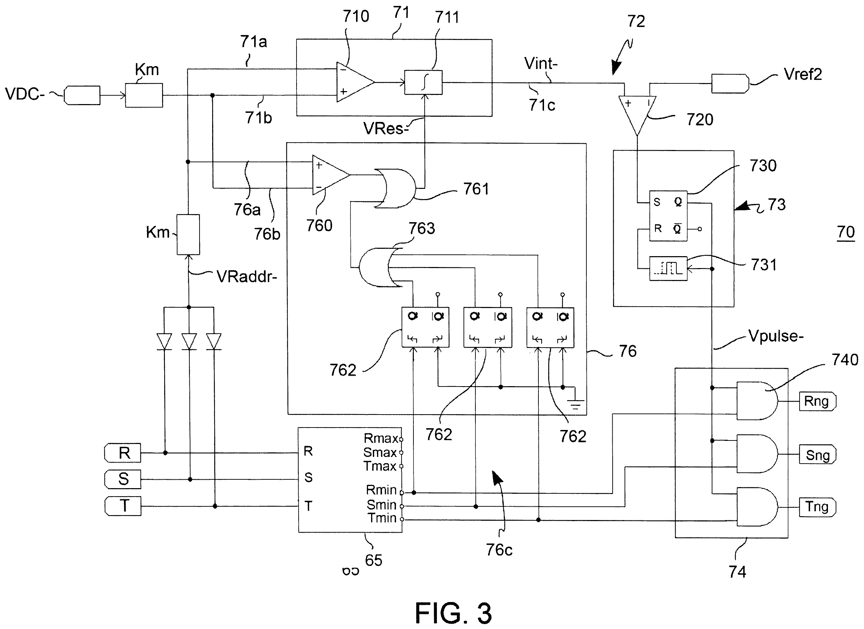

With reference to the embodiment in figure 3, the second control circuit 70 comprises a resettable differential integrator block 71 configured to receive the second direct voltage VDC- at a first input 71a and a second rectified voltage VRadd- a second input 71b.

Such a second rectified voltage VRadd- is obtained by selecting in each instant the minimum voltage from the phase voltages of the polyphase generator PMG, in particular from the first R, the second S and the third T phase voltage.

It is worth noting that both the second direct voltage VDC- and the second rectified voltage VRadd- at the input of the resettable different integrator block 71 are processed by means of an appropriate scale factor Km.

The resettable integrator block 71 is configured to generate a second integrated voltage Vint- on a respective output 71c. In other words, the output of the integrator 71 is equal to the integral of the difference between the second voltage VDC- and the smaller of the voltages of the phases R, S or T.

Furthermore, the second control circuit 70 further comprises a comparison block of current references 72 configured to compare the second integrated voltage Vint-with the second reference voltage Vref2 generated by the control unit CONTR. Thereby, the comparison block 72 is adapted to drive a respective pulse generator block 73 to generate a second pulse voltage Vpulse-.

Additionally, the second control circuit 70 further comprises a respective selection block 74 of the controlled-trigger semiconductor electronic device 3 of the second group 2 to be activated. Such a selection block receives at the input the aforesaid second pulse voltage Vpulse- and second enabling signals Rmin, Smin, Tmin generated by a voltage discriminator block 65 when the minimum values of the aforesaid phase voltages of the polyphase generator, in particular of the first R, second S and third T phase voltages of the three-phase generator PMG have been processed.

Furthermore, the second control circuit 70 comprises a respective generation block 76 of a reset signal for the resettable differential integrator 71. Such a block 76 is configured to generate the reset signal VRes- on the basis of:

- the second direct voltage VDC- supplied to a respective first input 76a of such a block 76;
- the second rectified voltage VRadd- supplied to a respective second input 76b of such a block 76;
- the second enabling signals Rmin, Smin, Tmin generated by the discriminator block 65 supplied to a respective third input 76c of such a block 76.

With reference to both embodiments of the control circuits 60,70 in figures 2 and 3, the resettable differential integrator block 61,71 comprises a first differential amplifier 610, 710 having an inverting terminal connected to the first input 61a,71a of the block, a non-inverting terminal connected to the second input 61b,71b of the block and an output terminal connected to a resettable integrator device 611,711.

With reference to both embodiments of the control circuits 60,70 in figures 2 and 3, the current reference comparison block 62,72 comprises a first comparator 620,720 having an inverting terminal for receiving the first/second reference voltage Vref1/Vref2, a non-inverting terminal for receiving the first/second integrated voltage Vint+/Vint- and an output terminal for driving the pulse generator block 63,73.

In particular, such a pulse generator block 63,73 comprises a flip-flop device 630,730 connected to a time shifting device 631,731.

With reference to both embodiments of the control circuits 60,70 in figures 2 and 3, the selection block 64,74 comprises three logic gates AND, each configured to receive at the input the first/second pulse voltage Vpulse+/Vpulse- and one of the aforesaid first/second enabling signals Rmax, Smax, Tmax generated by the discriminator block 65. Thereby, the selection block 64,74 is adapted to generate an activation signal Rpg, Spg, Tpg, Rng, Sng, Tng of one of the controlled-trigger semiconductor electronic device 3.

With reference to both embodiments of the control circuits 60,70 in figures 2 and 3, the reset signal generation block 66,76 comprises:

- a second comparator 660,760 having a non-inverting terminal connected to the first input 66a,76a of the block, an inverting terminal connected to a second input 66b,76b of the block and an output adapted to generate the reset signal VRes+/VRes- by driving a first input of a first logic gate OR 661,761;
- pulse generating modules 662,762 at signal up-edges which are adapted to receive the first/second enabling signals Rmax, Smax, Tmax/Rmin, Smin, Tmin generated by the discriminator block 65 to drive a second input of the first logic gate OR 661,761 by means of a second logic gate OR 663,763 having three inputs.

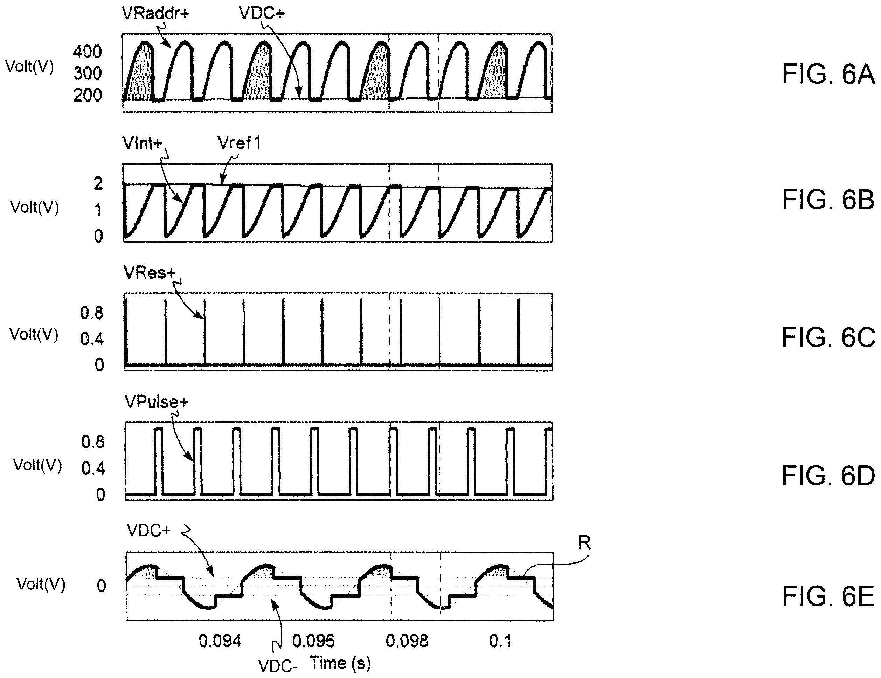

Figures 6A-6E show charts exemplifying the voltage signals associated with the diagram of the first control circuit 60 in figure 2 as a function of time. In particular, they show the trends of voltages VDC+, VRaddr+, Vint+, Vref1, VRes+, Vpulse+, in addition to the trend of the first phase voltage R.

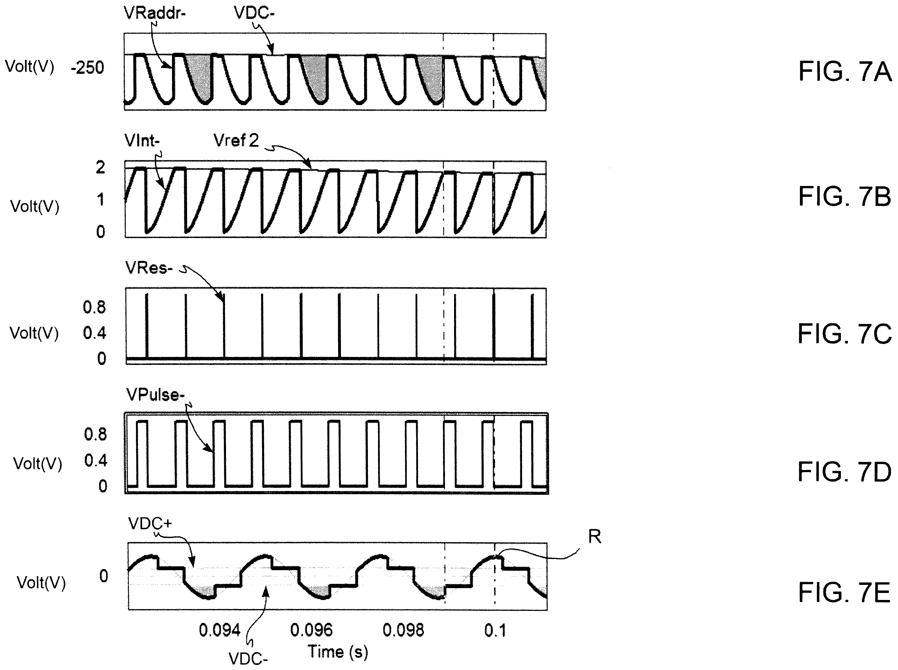

Figures 7A-7E show charts exemplifying the voltage signals associated with the diagram of the second control circuit 70 in figure 3 as a function of time. In particular, they show the trends of voltages VDC-, VRaddr-, Vint-, Vref2, VRes-, Vpulse-, in addition to the trend of the first phase voltage R.

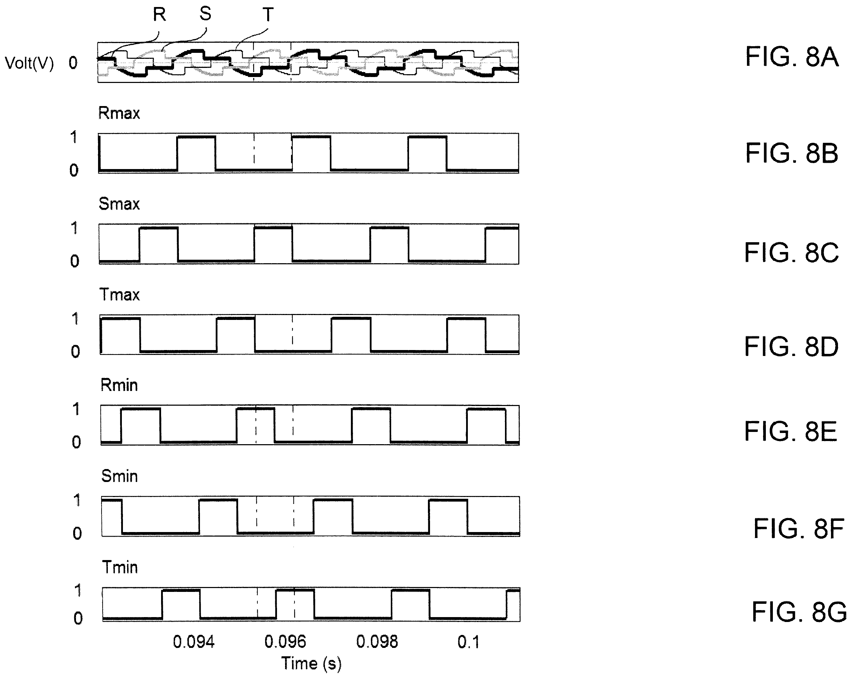

Figure 8A shows charts exemplifying the first R, the second S and the third T phase voltage signal generated by the three-phase generator PMG of the apparatus 100 as a function of time. Furthermore, figures 8B-8G show charts exemplifying the first/second digital enabling signals Rmax, Smax, Tmax/Rmin, Smin, Tmin generated by the voltage discriminator block 65.

With reference to figures 6A-6E, 7A-7E, in terms of operation, the differential integrator 61/71 of the first/second control circuit 60/70 is reset by the reset signal generator block 66/76 in two operative conditions:

a) when the maximum (or minimum in the case of the circuit 70) voltage between the phases R, S and T is smaller (or greater in the case of the circuit 70) than the first direct voltage VDC+ (of the second voltage VDC-in the case of the circuit 70) to control. In these conditions, the thyristors 3 of the first group 1 of the three-phase bridge (respectively, the thyristors of the second group 2) would be inversely polarized, and thus would not switch on. The output 61c/71c of the integrator 61/71 is held at zero value for as long as the aforesaid condition remains;

b) in the instant when one of the three phases R, S or T becomes greater than the others (or smaller than the others in the case of circuit 70). Such instants are determined by means of the digital enabling signals Rmax, Smax, Tmax/Rmin, Smin, Tmin generated by the aforesaid discriminator block 65.

In other words, according to the invention, the integrator 61/71 exploits the input sinusoidal voltage portion, which is not yet altered by the switching, to obtain the information on the appropriate instant to switch the thyristors 3 of rectifying/control stage 10.

In particular, the control circuit 60 in figure 2 calculates the following integral:

$$V_{int+}(t) = km \int_0^t (V_{raddr+}(t) - V_{DC+})\, dt \qquad (1)$$

Similarly, the dual control circuit in figure 3 calculates the following integral:

$$V_{int-}(t) = -km \int_0^t (V_{raddr-}(t) - V_{DC-})\, dt \qquad (2)$$

where km is the aforesaid scale factor with which all input voltages are measured.
Rectified voltages VRadd+, VRadd- may be expressed as:

$$V_{radd+}(t) = Max(Vr, Vs, Vt)\ e\ V_{radd-}(t) = Min(Vr, Vs, Vt) \qquad (3)$$

where Vr, Vs and Vt are voltages measured on the first R, second S and third phases T, respectively.
Hereafter, considering only the control circuit 60 in figure 2 and the first phase voltage R for the sake of simplicity (but the results apply to all phases and to the dual control circuit in figure 3 with the appropriate changes), the ratio applies:

$$V_{int}(t) = km \int_{t1}^t (V_r(t) - V_{DC+})\, dt \qquad (4)$$

where t belongs to the time range [t1,t2] in which the voltage Vr (phase R) is greater than the voltages on phases S and T. Furthermore, it is assumed that
Vr > VDC+ in [t1,t2]
because otherwise the differential integrator 61 would be reset by the specific reset block 66.
Considering the voltage applied at the first winding LR of the first phase R of the generator PMG, it results:

$$(V_r(t) - V_{DC+}) = L\, \frac{dI_L}{dt} \qquad (5)$$

So,

$$\int_{t1}^{t2} L \frac{dI_L}{dt} dt = L\left(I_L(t2) - I_L(t1)\right) = LI_L(t2) = LI_{Lpeak+(t1)} = LI_{LMax}$$

$$(6)$$

where it is assumed that the current $I_L$ in the first winding LR is zero at instant t1 and that the current $I_L$ is maximum at instant t2: indeed, from that instant, the override voltage on the winding becomes negative, and thus the current starts decreasing.

The equation (4) may thus be expressed as:

$$V_{int}(t) = km \int_{t1}^{t2} L \frac{dI_L}{dt} dt - km \int_{t}^{t2} L \frac{dI_L}{dt} dt -$$
$$= km * LI_{Lmax} - km * L\left(I_L(t2) - I_L(t)\right)$$
$$= km\, L(I_{LMax} - I_{Lpeak(t)})$$

$$(7)$$

In other words, the signal of the first integrated voltage Vint+(t) is proportional to the difference between the aforesaid maximum current $I_{LMax}$ and a peak current $I_{Lpeak+}(t)$ associated with the winding LR.

At this point, the signal of the first integrated voltage Vint+(t) of the equation (4) is compared with the first reference voltage Vref1, in particular with a reference voltage corresponding to a peak current reference signal CONTR, i.e. Vref1(Ipeak+) by means of the current reference comparison block 62.

If the signal of the first integrated voltage Vint+(t) is equal to the first reference voltage Vref1:

$$V_{int+}(t) = VRef(Ipeak+) = km\, L(I_{LMax} - I_{Lpeak+(t)})$$

$$(8)$$

the following is obtained:

$$I_{Lpeak+} = I_{LMax} - VRef(Ipeak+)/km\, L)$$

$$(9)$$

On the basis of the hypotheses shown above, the current peak in the first winding LR, generated by the thyristor switch 3 of the first group 1 at instant t0 belonging to the interval [t1,t2] in which the identity of the equation (8) is verified, is univocally determined by the reference Vref(Ipeak+) set by the control unit CONTR. The control unit CONTR controls the voltage reference Vref as a function of the peak current Ipeak+ required according to the ratio (10) :

$$Vref(Ipeak+) = Km\, L\,(I_{Lmax} - Ipeak+)$$

$$(10)$$

where L is the inductance of the winding LR and $I_{Lmax}$ is the estimate of the maximum current in the winding, calculated, again by the control unit CONTR, starting from the measurement of the instantaneous angular speed of the motor and from the instantaneous value of the first direct voltage VDC+.

Similar considerations also apply in relation to the second reference voltage Vref2(Ipeak-) of the control circuit 70.

Therefore, in the instant when the two voltage levels at the input of the comparison block 62 are equal, a pulse Vpulse+ is generated by the pulse generator block 63 having predetermined duration. Such a pulse Vpulse+ is sent to the gate of a thyristor 3 of the first group 1 having higher voltage through the selection block 64 by means of one of the digital enabling signals Rmax, Smax, Tmax generated by the discriminator block 65.

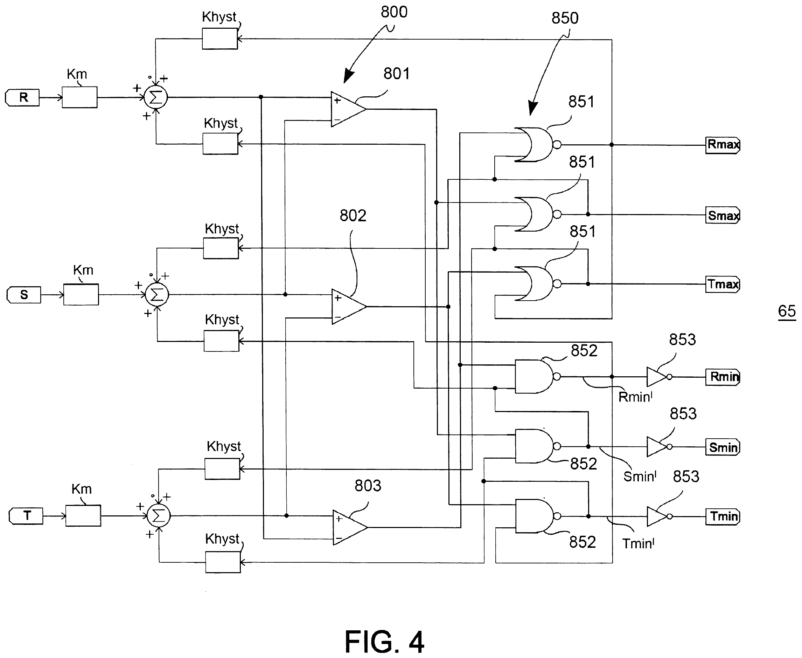

With reference to figure 4, a non-limiting embodiment of the discriminator block 65 of the maximum voltage phase and of the minimum voltage phase included in the control circuits 60, 70 of the apparatus 100 of the invention is shown.

Such a discriminator block 65 comprises, in a comparison section 800, three voltage comparators 801, 802, 803 which are mutually equal, configured to compare the levels of the three input phase voltages R, S, T processed by means of the same scale factor Km. In other words, in the comparison section 800, the first phase voltage R is compared with the second phase voltage S, the second phase voltage S is compared with the third phase voltage T and such a third phase voltage T is compared with the first voltage R.

Starting from the output signals of the three voltage comparators 801, 802, 803, a logic state machine 850 determines, instant by instant, which of the three input phases R, S, T has the highest voltage value, generating as a consequence one of the first digital enabling signals Rmax, Smax, Tmax. Similarly, a logic state machine 660 determines, instant by instant, which of the three input phases R, S, T has the lowest voltage value, generating one of the second digital enabling signals Rmax, Smax, Tmax as a consequence.

In particular, the logic state machine 850 comprises three mutually equal logic gates NOR 851 having two inputs and configured to provide the aforesaid first digital enabling signals Rmax, Smax, Tmax at the output.

Furthermore, the logic state machine 850 comprises three mutually equal logic gates NAND 852 having two inputs and connected at the output to further logic inverter gates 853 to provide the aforesaid second digital enabling signals Rmax, Smax, Tmax available at the output.

It is worth noting that the first digital enabling signals Rmax, Smax, Tmax themselves are used as positive feedback signals of each of the comparators 801, 802, 803 following the processing of such digital signals with appropriate hysteresis constant $K_{hyst}$.

Similarly, further second signals Rmin', Smin', Tmin' of logic value opposite to the aforesaid second digital enabling signals Rmin, Smin, Tmin are used as positive feedback signals of each of the comparators 801, 802, 803. Also in this case, the further second digital signals Rmin', Smin', Tmin' are processed with the aforesaid hysteresis constant $K_{hyst}$.

Such a configuration of the discriminator block 65 advantageously allows to avoid spurious switching in case of noise and to impose a predetermined level of the outputs of the comparators 801, 802, 803 in case of minimum differences between the three phase voltages R, S, T. The latter condition occurs, for example, if two thyristors 3 of the first group 1 (or two of the second group 2) are both biased, thus constraining the voltage of two of the three phases to the same voltage as the first Ch (or second Cl) capacitor.

It is worth noting that the operation of the control circuits 60,70 may be immediately extended if the generator PMG has more than three phases, as apparent for a person skilled in the art. This is obtained, in particular, by appropriately modifying the number of input/output signals of the reset block 66,76, of the selection block 64,74 and of the discriminator block 65. Instead, the differential integrator block 61,71, the comparison block 62,72 and the pulse generator block 63,73 remain unchanged.

In addition to the aforesaid advantages, the inverter-generator apparatus 100 of the present invention has a simpler circuit structure and is less costly that the inverter-generators of the known type, despite ensuring the same reduced harmonic distortion of the output voltage.

Those skilled in the art may make changes and adaptations to the embodiments of the inverter-generator apparatus described above or can replace elements with others which are functionally equivalent to satisfy contingent needs without departing from the scope of the appended claims.

## Claims

1. An inverter-generator apparatus (100), comprising:

- a polyphase voltage generator (PMG) having a common node (N) for connecting the phases;
- a rectifying/control stage (10) configured to rectify and control the polyphase voltage supplied by the polyphase voltage generator (PMG) generating a direct voltage;
- a DC/AC converter stage (40) configured to operate on said direct voltage and connected to the rectifying/control stage (10) by means of a first (DCB+) and a second (DCB-) conductive line, said DC/AC converter stage (40) comprising an analog/digital control unit (CONTR), said DC/AC converter stage (40) being configured to generate, in response to the direct voltage generated by the rectifying/control stage, a first alternating output voltage (Vout1) between a first output terminal (L1) and a common terminal (GND) of the apparatus, said common terminal (GND) being connected to the common node (N) of the polyphase generator;
- a voltage storage stage (50) interposed between the rectifying/control stage (10) and the DC/AC converter stage (40), said storage stage including:

a first capacitor (Ch) connected between the first conductive line (DCB+) and said common terminal (GND) of the apparatus and configured to store a first direct voltage (VDC+) of the direct voltage generated by the rectifying/control stage;
a second capacitor (Cl) connected between the second conductive line (DCB-) and said common terminal (GND) of the apparatus and configured to store a second direct voltage (VDC-) of the direct voltage generated by the rectifying/control stage;

said first and second direct voltages having equal amplitude,

wherein the rectifying/control stage (10) includes:

- a first (1) and a second (2) group of mutually equal controlled-trigger semiconductor electronic devices (3), each electronic device of the first group being connected to an electronic device of the second group;
- a first control circuit (60) of the controlled-trigger semiconductor electronic devices (3) of the first group (1), said first control circuit (60) being configured to limit a first current circulating in the electronic devices of the first group having a peak value proportional to a first reference voltage (Vref1) by timing the activation controls of the semiconductor electronic devices obtained on the basis of phase voltages (R, S, T) generated by the polyphase voltage generator (PMG) and of the first direct voltage (VDC+);
- a second control circuit (70) of the controlled-trigger semiconductor electronic devices (3) of the second group (2), said second control circuit (70) being configured to limit a second current circulating in the electronic devices of the second group having a peak value proportional to a second reference voltage (Vref2) by timing the activation controls of the semiconductor electronic devices obtained on the basis of phase voltages (R, S, T) generated by the polyphase voltage generator (PMG) and of the second direct voltage (VDC-);

said analog/digital control unit (CONTR) being configured to generate said first (Vref1) and second (Vref2) reference voltages to keep the first direct voltage (VDC+) stored in the first capacitor (Ch) and the second direct voltage (VDC-) stored in the second capacitor (Cl) equal to predetermined constant values as a load connected to the apparatus varies.

2. An inverter-generator apparatus (100) according to claim 1, wherein said polyphase voltage generator (PMG) is a three-phase generator including a first (LR), a second (LS) and a third (LT) winding to provide a first (R), a second (S) and a third (T) phase voltage, respectively, each winding having a first terminal (R', S', T') connected to the rectifying/control stage (10) and a second terminal connected to said common node (N).

3. An inverter-generator apparatus (100) according to claim 1 or 2, wherein said DC/AC converter stage (40) includes a first Half Bridge inverter (41) connected between the first (DCB+) and second (DCB-) conductive lines, said first Half Bridge inverter (41) including first transistors (Q1, Q2) which can be activated/deactivated by the control unit (CONTR) to generate, in response to the direct voltage generated by the rectifying/control stage (10), said first output alternating voltage (Vout1) between the first output terminal (L1) and the common terminal (GND) of the apparatus.

4. An inverter-generator apparatus (100) according to the preceding claim, wherein said DC/AC converter stage (40) further includes a second Half Bridge inverter (42) connected between the first (DCB+) and second (DCB-) conductive lines and similar to the first Half Bridge inverter (41), said second Half Bridge inverter (42) including second transistors (Q3, Q4) which can be activated/deactivated by the control unit (CONTR) to generate, in response to the direct voltage generated by the rectifying/control stage (10), a second output alternating voltage (Vout2) between the second output terminal (L2) and the common terminal (GND) of the apparatus, said first and second output voltages having the same amplitude and frequency and opposite phase.

5. An inverter-generator apparatus (100) according to the preceding claim, wherein said first transistors (Q1, Q2) are equal to said second transistors (Q3, Q4) and said DC/AC converter stage (40) is configured to generate, in response to the direct voltage generated by the rectifying/control stage (10), a differential output alternating voltage (Vod) between said first (L1) and second (L2) output terminals, said differential output voltage having the same frequency as said first output voltage (Vout1) and an amplitude which is double the amplitude of said first voltage.

6. An inverter-generator apparatus (100) according any one of the preceding claims, wherein said controlled-trigger semiconductor electronic devices (3) of the rectifying/control stage (10) are thyristors or SCRs (silicon controller rectifiers), each of which has a gate which can be activated by an activation signal (Rpg, Spg, Tpg, Rng, Sng, Tng) applied by the first (60) or second (70) control circuit.

7. An inverter-generator apparatus (100) according to claim 1, wherein said control unit (CONTR) comprises a microcontroller configured to receive at the input said first (VDC+) and second (VDC-) direct voltages and to provide said first (Vref1) and second (Vref2) reference voltages to the first (60) and second (70) control circuits, respectively.

8. An inverter-generator apparatus (100) according to claim 1, wherein said first/second control circuit (60)/(70) comprises a resettable differential integrator block (61)/(71) configured to receive said first/second direct voltage (VDC+)/(VDC-) at a first input (61a)/(71a) and a first/second rectified voltage (VRadd+)/(VRadd-) represented by the maximum/minimum phase voltage from the phase voltages of the polyphase generator (PMG) at a second input (61b)/(71b), and to generate a first/second integrated voltage (Vint+)/(Vint-) on an output (61c)/(71c) .

9. An inverter-generator apparatus (100) according to claim 8, wherein said first/second control circuit (60)/(70) further comprises a current reference comparison block (62)/(72) configured to compare said first/second integrated voltage (Vint+)/(Vint-) with said first/second reference voltage (Vref1)/(Vref2) to drive a pulse generator block (63)/(73) adapted to generate a first/second pulse voltage (Vpulse +)/(Vpulse-).

10. An inverter-generator apparatus (100) according to the preceding claim, wherein said first/second control circuit (60)/(70) further comprises a selection block (64)/(74) of the controlled-trigger semiconductor electronic device (3) of the first/second group (1)/(2) to be activated, said selection block receiving at the input said first/second pulse voltage (Vpulse+)/(Vpulse-) and first/second enabling signals (Rmax, Smax, Tmax)/(Rmin, Smin, Tmin) generated by a discriminator block (65) when the maximum/minimum values of said phase voltages of the polyphase generator (PMG) have been processed.

11. An inverter-generator apparatus (100) according to claim 10, wherein said first/second control circuit (60)/(70) comprises a generation block (66)/(76) of a reset signal for the resettable differential integrator (61)/(71), said block being configured to generate the reset signal (VRes+)/(VRes-) on the basis of:

- the first/second direct voltage (VDC+)/(VDC-) supplied to a respective first input (66a)/(76a) of said block;
- the first/second rectified voltage (VRadd+)/(VRadd-) supplied to a respective second input (66b)/(76b) of said block;
- the first/second enabling signals (Rmax, Smax, Tmax)/(Rmin, Smin, Tmin) generated by the discriminator block (65) supplied to a respective third input (66c)/(76c) of said block.

12. An inverter-generator apparatus (100) according to claim 8, wherein the resettable differential integrator block (61)/(71) comprises a first differential amplifier (610)/(710) having an inverting terminal connected to the first input (61a)/(71a) of the block, a non-inverting terminal connected to the second input (61b)/(71b) of the block, and an output terminal connected to a resettable integrator device (611)/(711).

13. An inverter-generator apparatus (100) according to claim 9, wherein said current reference comparison block (62)/(72) comprises a first comparator (620)/(720) having an inverting terminal for receiving the first/second reference voltage (Vref1)/(Vref2), a non-inverting terminal for receiving the first/second integrated voltage (Vint+)/(Vint-), and an output terminal for driving the pulse generator block (63)/(73).

14. An inverter-generator apparatus (100) according to claim 10, wherein said pulse generator block (63)/(73) comprises a flip-flop device (630)/(730) connected to a time shifting device (631)/(731).

15. An inverter-generator apparatus (100) according to claim 10, wherein said selection block (64)/(74) comprises three logic gates AND, each configured to receive at the input the first/second pulse voltage (Vpulse +)/(Vpulse-) and one of said first/second enabling signals (Rmax, Smax, Tmax)/(Rmin, Smin, Tmin) generated by the discriminator block (65), to generate an activation signal (Rpg, Spg, Tpg, Rng, Sng, Tng) of the controlled-trigger semiconductor electronic device (3).

16. An inverter-generator apparatus (100) according to claim 11, wherein the reset signal generation block (66)/(76) comprises:

- a second comparator (660)/(760) having a non-inverting terminal connected to the first input (66a)/(76a) of the block, an inverting terminal connected to a second input (66b)/(76b) of the block, and an output adapted to generate the reset signal (VRes+)/(VRes-) by driving a first input of a first logic gate OR (661)/(761);
- pulse generating modules (662)/(762) at signal up-edges adapted to receive said first/second enabling signals (Rmax, Smax, Tmax)/(Rmin, Smin, Tmin) generated by the discriminator block (65) to drive a second input of said first logic gate OR (661)/(761) by means of a second logic gate OR (663)/(763) having three inputs.

**Patentansprüche**

1. Inverter-Generator-Vorrichtung (100), umfassend:

- einen Mehrphasenspannungsgenerator (PMG), welcher einen gemeinsamen Knoten (N) zum Verbinden der Phasen aufweist;
- eine zum Gleichrichten und Steuern der durch den Mehrphasenspannungsgenerator (PMG) zugeführten Mehrphasenspannung eingerichtete Gleichrichter-/Steuerstufe (10), welche eine Gleichspannung generiert;
- eine DC/AC-Konverter-Stufe (40), welche dazu eingerichtet ist, mit der Gleichspannung zu arbeiten, und mittels einer ersten (DCB+) und einer zweiten (DCB-) Leiterbahn mit der Gleichrichter-/Steuerstufe (10) verbunden ist, wobei die DC/AC-Konverter-Stufe (40) eine Analog-/Digital-Steuereinheit (CONTR) umfasst, wobei die DC/AC-Konverter-Stufe (40) dazu eingerichtet ist, als Reaktion auf die durch die Gleichrichter-/Steuerstufe generierte Gleichspannung eine erste Ausgangswechselspannung (Vout1) zwischen einem ersten Ausgangsanschluss (L1) und einem gemeinsamen Anschluss (GND) der Vorrichtung zu generieren, wobei der gemeinsame Anschluss (GND) mit dem gemeinsamen Knoten (N) des Mehrphasengenerators verbunden ist;
- eine Spannungsspeicherstufe (50), welche zwischen der Gleichrichter-/Steuerstufe (10) und der DC/AC-Konverter-Stufe (40) eingefügt ist, wobei die Speicherstufe umfasst:

einen ersten Kondensator (Ch), welcher zwischen die erste Leiterbahn (DCB+) und den gemeinsamen Anschluss (GND) der Vorrichtung geschaltet ist und dazu eingerichtet ist, eine erste Gleichspannung (VDC+) der durch die Gleichrichter-/Steuerstufe generierten Gleichspannung zu speichern;
einen zweiten Kondensator (Cl), welcher zwischen die zweite Leiterbahn (DCB-) und den gemeinsamen Anschluss (GND) der Vorrichtung geschaltet ist und dazu eingerichtet ist, eine zweite Gleichspannung (VDC-) der durch die Gleichrichter-/Steuerstufe generierten Gleichspannung zu speichern;
wobei die erste und die zweite Gleichspannung eine gleiche Amplitude aufweisen,
wobei die Gleichrichter-/Steuerstufe (10) umfasst:

- eine erste (1) und eine zweite (2) Gruppe elektronischer Halbleitervorrichtungen (3) mit gegenseitig gleich gesteuertem Trigger, wobei jede elektronische Vorrichtung der ersten Gruppe mit einer elektronischen Vorrichtung der zweiten Gruppe verbunden ist;
- eine erste Steuerschaltung (60) der elektronischen Halbleitervorrichtungen (3) mit gesteuertem Trigger der ersten Gruppe (1), wobei die erste Steuerschaltung (60) dazu eingerichtet ist, einen in den elektronischen Vorrichtungen der ersten Gruppe zirkulierenden ersten Strom zu begrenzen, welcher einen zu einer ersten Referenzspannung (Vref1) proportionalen Spitzenwert aufweist, indem die auf der Grundlage von Phasenspannungen (R, S, T), welche durch den Mehrphasenspannungsgenerator (PMG) generiert werden, und der ersten Gleichspannung (VDC+) erhaltenen Aktivierungssteuerungen der elektronischen Halbleitervorrichtungen zeitlich eingestellt werden;
- eine zweite Steuerschaltung (70) der elektronischen Halbleitervorrichtungen (3) mit gesteuertem Trigger der zweiten Gruppe (2), wobei die zweite Steuerschaltung (70) dazu eingerichtet ist, einen in den elektronischen Vorrichtungen der zweiten Gruppe zirkulierenden zweiten Strom zu begrenzen, welcher einen zu einer zweiten Referenzspannung (Vref2) proportionalen Spitzenwert aufweist, indem die auf der Grundlage von Phasenspannungen (R, S, T), welche durch den Mehrphasenspannungsgenerator (PMG) generiert werden, und der zweiten Gleichspannung (VDC-) erhaltenen Aktivierungssteuerungen der elektronischen Halbleitervorrichtungen zeitlich eingestellt werden;

wobei die Analog-/Digital-Steuereinheit (CONTR) dazu eingerichtet ist, die erste (Vref1) und die zweite (Vref2) Referenzspannung zu generieren, um die erste Gleichspannung (VDC+) in dem ersten Kondensator (Ch) und die zweite Gleichspannung (VDC-) in dem zweiten Kondensator (Cl) gleich vorbestimmten konstanten Werten gespeichert zu halten, wenn eine an die Vorrichtung angeschlossene Last variiert.

2. Inverter-Generator-Vorrichtung (100) nach Anspruch 1, wobei der Mehrphasenspannungsgenerator (PMG) ein Dreiphasengenerator ist, welcher eine erste (LR), eine zweite (LS) und eine dritte (LT) Windung umfasst, um eine erste (R), eine zweite (S) bzw. eine dritte (T) Phasenspannung bereitzustellen, wobei jede Windung einen ersten Anschluss (R', S', T'), welcher mit der Gleichrichter-/Steuerstufe (10) verbunden ist, und einen zweiten Anschluss aufweist, welcher mit dem gemeinsamen Knoten (N) verbunden ist.

3. Inverter-Generator-Vorrichtung (100) nach Anspruch 1 oder 2, wobei die DC/AC-Konverter-Stufe (40) einen ersten Halbbrücken-Inverter (41) umfasst, welcher zwischen die erste (DCB+) und die zweite (DCB-) Leiterbahn geschaltet ist, wobei der erste Halbbrücken-Inverter (41) erste Transistoren (Q1, Q2) umfasst, welche durch die Steuereinheit (CONTR) aktiviert/deaktiviert werden können, um als Reaktion auf die durch die Gleichrichter-/Steuerstufe (10) generierte Gleichspannung die erste Ausgangswechselspannung (Vout1) zwischen dem ersten Ausgangsanschluss (L1) und dem gemeinsamen Anschluss (GND) der Vorrichtung zu generieren.

4. Inverter-Generator-Vorrichtung (100) nach dem vorhergehenden Anspruch, wobei die DC/AC-Konverter-Stufe (40) ferner einen zweiten Halbbrücken-Inverter (42) umfasst, welcher zwischen die erste (DCB+) und die zweite (DCB-) Leiterbahn geschaltet ist, und wobei, ähnlich wie der erste Halbbrücken-Inverter (41), der zweite Halbbrücken-Inverter (42) zweite Transistoren (Q3, Q4) umfasst, welche durch die Steuereinheit (CONTR) aktiviert/deaktiviert werden können, um als Reaktion auf die durch die Gleichrichter-/Steuerstufe (10) generierte Gleichspannung eine zweite Ausgangswechselspannung (Vout2) zwischen dem zweiten Ausgangsanschluss (L2) und dem gemeinsamen Anschluss (GND) der Vorrichtung zu generieren, wobei die erste und die zweite Ausgangsspannung die gleiche Amplitude und Frequenz und eine entgegengesetzte Phase aufweisen.

5. Inverter-Generator-Vorrichtung (100) nach dem vorhergehenden Anspruch, wobei die ersten Transistoren (Q1, Q2) gleich wie die zweiten Transistoren (Q3, Q4) sind und die DC/AC-Konverter-Stufe (40) dazu eingerichtet ist, als Reaktion auf die durch die Gleichrichter-/Steuerstufe (10) generierte Gleichspannung eine Differenzausgangswechselspannung (Vod) zwischen dem ersten (L1) und dem zweiten (L2) Ausgangsanschluss zu generieren, wobei die Differenzausgangsspannung die gleiche Frequenz wie die erste Ausgangsspannung (Vout1) und eine Amplitude aufweist, welche die doppelte Amplitude der ersten Spannung ist.

6. Inverter-Generator-Vorrichtung (100) nach einem der vorhergehenden Ansprüche, wobei die elektronischen Halbleitervorrichtungen (3) mit gesteuertem Trigger der Gleichrichter-/Steuerstufe (10) Thyristoren oder SCRs (silicon controller rectifiers - Siliziumsteuerungsgleichrichter) sind, von welchen jeder ein Gatter aufweist, welches durch ein durch die erste (60) oder die zweite (70) Steuerschaltung angelegtes Aktivierungssignal (Rpg, Spg, Tpg, Rng, Sng, Tng) aktiviert werden kann.

7. Inverter-Generator-Vorrichtung (100) nach Anspruch 1, wobei die Steuereinheit (CONTR) einen Mikrocontroller umfasst, welcher dazu eingerichtet ist, an dem Eingang die erste (VDC+) und die zweite (VDC-) Gleichspannung zu empfangen und die erste (Vref1) und die zweite (Vref2) Referenzspannung der ersten (60) bzw. der zweiten (70) Steuerschaltung bereitzustellen.

8. Inverter-Generator-Vorrichtung (100) nach Anspruch 1, wobei die erste / die zweite Steuerschaltung (60) / (70) einen rücksetzbaren Differenzintegratorblock (61) / (71) umfasst, welcher dazu eingerichtet ist, an einem ersten Eingang (61a) / (71a) die erste / die zweite Gleichspannung (VDC+) / (VDC-) und an einem zweiten Eingang (61b) / (71b) eine erste / eine zweite gleichgerichtete Spannung (VRadd+) / (VRadd-) zu empfangen, welche aus den Phasenspannungen des Mehrphasengenerators (PMG) durch die maximale / die minimale Phasenspannung repräsentiert ist, und an einem Ausgang (61c) / (71c) eine erste / eine zweite integrierte Spannung (Vint+) / (Vint-) zu generieren.

9. Inverter-Generator-Vorrichtung (100) nach Anspruch 8, wobei die erste / die zweite Steuerschaltung (60) / (70) ferner einen Stromreferenzvergleichsblock (62) / (72) umfasst, welcher dazu eingerichtet ist, die erste / die zweite integrierte Spannung (Vint+) / (Vint-) mit der ersten / der zweiten Referenzspannung (Vref1) / (Vref2) zu vergleichen, um einen Impulsgeneratorblock (63) / (73) anzusteuern, welcher dazu geeignet ist, eine erste / eine zweite Impulsspannung (Vpulse+) / (Vpulse-) zu generieren.

10. Inverter-Generator-Vorrichtung (100) nach dem vorhergehenden Anspruch, wobei die erste / die zweite Steuerschaltung (60) / (70) ferner einen Auswahlblock (64) / (74) der zu aktivierenden elektronischen Halbleitervorrichtungen (3) mit gesteuertem Trigger der ersten / der zweiten Gruppe (1) / (2) umfasst, wobei der Auswahlblock an dem Eingang die erste / die zweite Impulsspannung (Vpulse+) / (Vpulse-) und erste / zweite Freigabesignale (Rmax, Smax, Tmax) / (Rmin, Smin, Tmin) empfängt, welche durch einen Diskriminatorblock (65) generiert werden, wenn die maximalen / die minimalen Werte der Phasenspannungen des Mehrphasengenerators (PMG) verarbeitet worden sind.

11. Inverter-Generator-Vorrichtung (100) nach Anspruch 10, wobei die erste / die zweite Steuerschaltung (60) / (70) einen Generierungsblock (66) / (76) eines Rücksetzsignals für den rücksetzbaren Differenzintegratorblock (61) / (71) umfasst, wobei der Block dazu eingerichtet ist, das Rücksetzsignal (Vres+) / (Vres-) zu generieren auf der Grundlage:

    - der ersten / der zweiten Gleichspannung (VDC+) / (VDC-), welche einem jeweiligen ersten Eingang (66a) / (76a) des Blocks zugeführt wird;
    - der ersten / der zweiten gleichgerichteten Spannung (VRadd+) / (VRadd-), welche einem jeweiligen zweiten Eingang (66b) / (76b) des Blocks zugeführt wird;

- der ersten / der zweiten Freigabesignale (Rmax, Smax, Tmax) / (Rmin, Smin, Tmin), welche durch den Diskriminatorblock (65) generiert werden, welche einem jeweiligen dritten Eingang (66c) / (76c) des Blocks zugeführt werden.

**12.** Inverter-Generator-Vorrichtung (100) nach Anspruch 8, wobei der rücksetzbare Differenzintegratorblock (61) / (71) einen ersten Differenzverstärker (610) / (710) umfasst, welcher einen invertierenden Anschluss, welcher mit dem ersten Eingang (61a) / (71a) des Blocks verbunden ist, einen nicht invertierenden Anschluss, welcher mit dem zweiten Eingang (61b) / (71b) des Blocks verbunden ist, und einen Ausgangsanschluss aufweist, welcher mit einer rücksetzbaren Integratorvorrichtung (611) / (711) verbunden ist.

**13.** Inverter-Generator-Vorrichtung (100) nach Anspruch 9, wobei der Stromreferenzvergleichsblock (62) / (72) einen ersten Komparator (620) / (720) umfasst, welcher einen invertierenden Anschluss zum Empfangen der ersten / der zweiten Referenzspannung (Vref1) / (Vref2), einen nicht invertierenden Anschluss zum Empfangen der ersten / der zweiten integrierten Spannung (Vint+) / (Vint-) und einen Ausgangsanschluss zum Ansteuern des Impulsgeneratorblocks (63) / (73) aufweist.

**14.** Inverter-Generator-Vorrichtung (100) nach Anspruch 10, wobei der Impulsgeneratorblock (63) / (73) eine Flip-Flop-Vorrichtung (630) / (730) umfasst, welche mit einer Zeitschaltvorrichtung (631) / (731) verbunden ist.

**15.** Inverter-Generator-Vorrichtung (100) nach Anspruch 10, wobei der Auswahlblock (64) / (74) drei UND-Logikgatter umfasst, welche jeweils dazu eingerichtet sind, an dem Eingang die erste / die zweite Impulsspannung (Vpulse+) / (Vpulse-) und eines der ersten / der zweiten Freigabesignale (Rmax, Smax, Tmax) / (Rmin, Smin, Tmin) zu empfangen, welche durch den Diskriminatorblock (65) generiert werden, um ein Aktivierungssignal (Rpg, Spg, Tpg, Rng, Sng, Tng) der elektronischen Halbleitervorrichtung (3) mit gesteuertem Trigger zu generieren.

**16.** Inverter-Generator-Vorrichtung (100) nach Anspruch 11, wobei der Rücksetzsignalgenerierungsblock (66) / (76) umfasst:

- einen zweiten Komparator (660) / (760), welcher einen nicht invertierenden Anschluss, welcher mit dem ersten Eingang (66a) / (76a) des Blocks verbunden ist, einen invertierenden Anschluss, welcher mit einem zweiten Eingang (66b) / (76b) des Blocks verbunden ist, und einen Ausgang aufweist, welcher dazu geeignet ist, durch Ansteuern eines ersten Eingangs eines ersten ODER-Logikgatters (661) / (761) ein Rücksetzsignal (Vres+) / (Vres-) zu generieren;
- Impulsgenerierungsmodule (662) / (762) an Signalaufwärtsflanken, welche dazu geeignet sind, die ersten / die zweiten Freigabesignale (Rmax, Smax, Tmax) / (Rmin, Smin, Tmin) zu empfangen, welche durch den Diskriminatorblock (65) generiert werden, um mittels eines zweiten ODER-Logikgatters (663) / (763), welches drei Eingänge aufweist, einen zweiten Eingang des ersten ODER-Logikgatters (661) / (761) anzusteuern.

**Revendications**

**1.** Appareil onduleur-générateur (100), comprenant :

- un générateur de tension polyphasé (PMG) possédant un noeud commun (N) pour connecter les phases ;
- un étage de redressement/commande (10) configuré pour redresser et commander la tension polyphasée fournie par le générateur de tension polyphasé (PMG) générant une tension continue ;
- un étage de convertisseur CC/CA (40) configuré pour agir sur ladite tension continue et connecté à l'étage de redressement/commande (10) au moyen d'une première (DCB+) et d'une seconde (DCB-) lignes conductrices, ledit étage de convertisseur CC/CA (40) comprenant une unité de commande analogique/numérique (CONTR), ledit étage de convertisseur CC/CA (40) étant configuré pour générer, en réponse à la tension continue générée par l'étage de redressement/commande, une première tension de sortie alternative (Vout1) entre une première borne de sortie (L1) et une borne commune (GND) de l'appareil, ladite borne commune (GND) étant connectée au noeud commun (N) du générateur polyphasé ;
- un étage d'accumulation de tension (50) intercalé entre l'étage de redressement/commande (10) et l'étage de convertisseur CC/CA (40), ledit étage d'accumulation incluant :

un premier condensateur (Ch) connecté entre la première ligne conductrice (DCB+) et ladite borne commune (GND) de l'appareil et configuré pour accumuler une première tension continue (VDC+) de la tension continue générée par l'étage de redressement/commande ;

un second condensateur (C1) connecté entre la seconde ligne conductrice (DCB-) et ladite borne commune (GND) de l'appareil et configuré pour accumuler une seconde tension continue (VDC-) de la tension continue générée par l'étage de redressement/commande ;

lesdites première et seconde tensions continues possédant une amplitude égale,

dans lequel l'étage de redressement/commande (10) inclut :

- un premier (1) et un second (2) groupes de dispositifs électroniques à semi-conducteurs à déclencheur commandé (3) réciproquement égaux, chaque dispositif électronique du premier groupe étant connecté à un dispositif électronique du second groupe ;

- un premier circuit de commande (60) des dispositifs électroniques à semi-conducteurs à déclencheur commandé (3) du premier groupe (1), ledit premier circuit de commande (60) étant configuré pour limiter un premier courant circulant dans les dispositifs électroniques du premier groupe possédant une valeur de crête proportionnelle à une première tension de référence (Vréf1) en synchronisant les commandes d'activation des dispositifs électroniques à semi-conducteurs obtenues sur la base de tensions de phase (R, S, T) générées par le générateur de tension polyphasé (PMG) et de la première tension continue (VDC+) ;

- un second circuit de commande (70) des dispositifs électroniques à semi-conducteurs à déclencheur commandé (3) du second groupe (2), ledit second circuit de commande (70) étant configuré pour limiter un second courant circulant dans les dispositifs électroniques du second groupe possédant une valeur de crête proportionnelle à une seconde tension de référence (Vref2) en synchronisant les commandes d'activation des dispositifs électronique à semi-conducteurs obtenues sur la base de tensions de phase (R, S, T) générées par le générateur de tension polyphasé (PMG) et de la seconde tension continue (VDC-) ;

ladite unité de commande analogique/numérique (CONTR) étant configurée pour générer lesdites première (Vref1) et seconde (Vref2) tensions de référence pour conserver la première tension continue (VDC+) accumulée dans le premier condensateur (Ch) et la seconde tension continue (VDC-) accumulée dans le second condensateur (C1) égales à des valeurs constantes prédéterminées à mesure qu'une charge connectée à l'appareil varie.

2. Appareil onduleur-générateur (100) selon la revendication 1, dans lequel ledit générateur de tension polyphasé (PMG) est un générateur triphasé incluant un premier (LR), un deuxième (LS) et un troisième (LT) enroulements pour fournir une première (R), une deuxième (S) et une troisième (T) tensions de phase, respectivement, chaque enroulement possédant une première borne (R', S', T') connectée à l'étage de redressement/commande (10) et une seconde borne connectée audit noeud commun (N).

3. Appareil onduleur-générateur (100) selon la revendication 1 ou 2, dans lequel ledit étage de convertisseur CC/CA (40) inclut un premier onduleur en demi-pont (41) connecté entre les première (DCB+) et seconde (DCB-) lignes conductrices, ledit premier onduleur en demi-pont (41) incluant des premiers transistors (Q1, Q2) qui peuvent être activés/désactivés par l'unité de commande (CONTR) pour générer, en réponse à la tension continue générée par l'étage de redressement/commande (10), ladite première tension alternative de sortie (Vout1) entre la première borne de sortie (L1) et la borne commune (GND) de l'appareil.

4. Appareil onduleur-générateur (100) selon la revendication précédente, dans lequel ledit étage de convertisseur CC/CA (40) inclut en outre un second onduleur en demi-pont (42) connecté entre les première (DCB+) et seconde (DCB-) lignes conductrices et similaire au premier onduleur en demi-pont (41), ledit second onduleur en demi-pont (42) incluant des seconds transistors (Q3, Q4) qui peuvent être activés/désactivés par l'unité de commande (CONTR) pour générer, en réponse à la tension continue générée par l'étage de redressement/commande (10), une seconde tension alternative de sortie (Vout2) entre la seconde borne de sortie (L2) et la borne commune (GND) de l'appareil, lesdites première et seconde tensions de sortie possédant les mêmes amplitude et fréquence et phase opposée.

5. Appareil onduleur-générateur (100) selon la revendication précédente, dans lequel lesdits premiers transistors (Q1, Q2) sont égaux auxdits seconds transistors (Q3, Q4) et ledit étage de convertisseur CC/CA (40) est configuré pour générer, en réponse à la tension continue générée par l'étage de redressement/commande (10), une tension alternative de sortie différentielle (Vod) entre lesdites première (L1) et seconde (L2) bornes de sortie, ladite tension de sortie différentielle possédant la même fréquence que ladite première tension de sortie (Vout1) et une amplitude qui est le double de l'amplitude de ladite première tension.

6. Appareil onduleur-générateur (100) selon l'une quelconque des revendications précédentes, dans lequel lesdits dispositifs électroniques à semi-conducteurs à déclencheur commandé (3) de l'étage de redressement/commande (10) sont des thyristors ou des RCS (redresseurs commandés au silicium), dont chacun possède une porte qui peut être activée par un signal d'activation (Rpg, Spg, Tpg, Rng, Sng, Tng) appliqué par le premier (60) ou le second (70) circuit de commande.

7. Appareil inverseur-générateur (100) selon la revendication 1, dans lequel ladite unité de commande (CONTR) comprend un microcontrôleur configuré pour recevoir au niveau de l'entrée lesdites première (VDC+) et seconde (VDC-) tensions continues et pour fournir lesdites première (Vref1) et seconde (Vref2) tensions de référence aux premier (60) et second (70) circuits de commande, respectivement.

8. Appareil onduleur-générateur (100) selon la revendication 1, dans lequel ledit premier/second circuit de commande (60)/(70) comprend un bloc intégrateur différentiel réinitialisable (61)/(71) configuré pour recevoir ladite première/seconde tension continue (VDC+)/(VDC-) au niveau d'une première entrée (61a)/(71a) et une première/seconde tension redressée (VRadd+)/(VRadd-) représentée par la tension de phase maximum/minimum parmi les tensions de phase du générateur polyphasé (PMG) au niveau d'une seconde entrée (61b)/(71b), et pour générer une première/seconde tension intégrée (Vint+)(Vint-) sur une sortie (61c)/(71c).

9. Appareil onduleur-générateur (100) selon la revendication 8, dans lequel ledit premier/second circuit de commande (60)/(70) comprend en outre un bloc de comparaison de référence de courant (62)/(72) configuré pour comparer ladite première/seconde tension intégrée (Vint+/Vint-) avec ladite première/seconde tension de référence (Vref1)/(Vref2) afin d'exciter un bloc générateur d'impulsions (63)/(73) adapté pour générer une première/seconde tension d'impulsion (Vpulse+)/(Vpulse-).

10. Appareil onduleur-générateur (100) selon la revendication précédente, dans lequel ledit premier/second circuit de commande (60)/(70) comprend en outre un bloc de sélection (64)/(74) du dispositif électronique à semi-conducteurs à déclencheur commandé (3) du premier/second groupe (1)/(2) à activer, ledit bloc de sélection recevant au niveau de l'entrée ladite première/seconde tension d'impulsion (Vpulse+)/(Vpulse-) et des premiers/seconds signaux d'activation (Rmax, Smax, Tmax)/(Rmin, Smin, Tmin) générés par un bloc discriminateur (65) lorsque les valeurs maximum/minimum desdites tensions de phase du générateur polyphasé (PMG) ont été traitées.

11. Appareil onduleur-générateur (100) selon la revendication 10, dans lequel ledit premier/second circuit de commande (60)/(70) comprend un bloc de génération (66)/(76) d'un signal de réinitialisation pour l'intégrateur différentiel réinitialisable (61)/(71), ledit bloc étant configuré pour générer le signal de réinitialisation (VRes+)/(VRes-) en se basant sur :

- la première/seconde tension continue (VDC+/)/(VDC-) fournie à la première entrée respective (66a)/(76a) dudit bloc ;
- la première/seconde tension redressée (VRadd+)/(VRadd-) fournie à une deuxième entrée respective (66b)/(76b) dudit bloc ;
- les premiers/seconds signaux d'activation (Rmax, Smax, Tmax)/(Rmin, Smin, Tmin) générés par le bloc discriminateur (65) fournis à une troisième entrée respective (66c)/(76c) dudit bloc.

12. Appareil onduleur-générateur (100) selon la revendication 8, dans lequel le bloc intégrateur différentiel réinitialisable (61)/(71) comprend un premier amplificateur différentiel (610)/(710) possédant une borne inverseuse connectée à la première entrée (61a)/(71a) du bloc, une borne non inverseuse connectée à la seconde entrée (61b/71b) du bloc, et une borne de sortie connectée à un dispositif intégrateur réinitialisable (611)/(711).

13. Appareil onduleur-générateur (100) selon la revendication 9, dans lequel ledit bloc de comparaison de référence de courant (62)/(72) comprend un premier comparateur (620)/(720) possédant une borne inverseuse pour recevoir la première/seconde tension de référence (Vref1)/(Vref2), une borne non inverseuse pour recevoir la première/seconde tension intégrée (Vint+/Vint-), et une borne de sortie pour exciter le bloc générateur d'impulsions (63)/(73).

14. Appareil onduleur-générateur (100) selon la revendication 10, dans lequel ledit bloc générateur d'impulsions (63)/(73) comprend un dispositif d'Eccles-Jordan (630)/(730) connecté à un dispositif de décalage temporel (631)/(731).

15. Appareil onduleur-générateur (100) selon la revendication 10, dans lequel ledit bloc de sélection (64)/(74) comprend trois portes logiques ET, configurées chacune pour recevoir au niveau de l'entrée la première/seconde tension d'impulsion (Vpulse+)/(Vpulse-) et l'un desdits premiers/seconds signaux d'activation (Rmax, Smax, Tmax)/(Rmin, Smin, Tmin) générés par le bloc discriminateur (65), afin de générer un signal d'activation (Rpg, Spg, Tpg, Rng, Sng, Tng) du dispositif électronique à semi-conducteurs à déclencheur commandé (3).

16. Appareil onduleur-générateur (100) selon la revendication 11, dans lequel le bloc de génération de signaux de réinitialisation (66)/(76) comprend :

- un second comparateur (660)/(760) possédant une borne non inverseuse connectée à la première entrée (66a)/(76a) du bloc, une borne inverseuse connectée à une seconde entrée (66b)/(76b) du bloc, et une sortie adaptée pour générer le signal de réinitialisation (VRes+)/(VRes-) en excitant une première entrée d'une première porte logique OU (661)/(761) ;
- des modules de génération d'impulsions (662)/(762) au niveau de fronts supérieurs de signal adaptés pour recevoir lesdits premiers/seconds signaux d'activation (Rmax, Smax, Tmax)/(Rmin, Smin, Tmin) générés par le bloc discriminateur (65) afin d'exciter une seconde entrée de ladite première porte logique OU (661)/(761) au moyen d'une seconde porte logique OU (663)/(763) possédant trois entrées.

FIG. 1

EP 3 343 745 B1

FIG. 2

FIG. 3

EP 3 343 745 B1

65

FIG. 4

21

FIG. 5A

FIG. 5B

FIG. 6A

FIG. 6B

FIG. 6C

FIG. 6D

FIG. 6E

FIG. 7A

FIG. 7B

FIG. 7C

FIG. 7D

FIG. 7E

R S T

Volt(V)  0

FIG. 8A

Rmax

1

0

FIG. 8B

Smax

1

0

FIG. 8C

Tmax

1

0

FIG. 8D

Rmin

1

0

FIG. 8E

Smin

1

0

FIG. 8F

Tmin

1

0

FIG. 8G

0.094    0.096    0.098    0.1

Time (s)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05292759 A
- US 5315497 A
- JP 2005110336 A
- EP 1187305 A2